Europäisches Patentamt

European Patent Office

Office européen des brevets

(19)

(11)  EP 1 106 473 B1

(12)  **FASCICULE DE BREVET EUROPEEN**

(45) Date de publication et mention
de la délivrance du brevet:
**28.07.2004  Bulletin 2004/31**

(51) Int Cl.⁷: **B62D 1/28**, B62D 6/00

(21) Numéro de dépôt: **00403447.6**

(22) Date de dépôt: **08.12.2000**

(54)  **Procédé et dispositif de commande de la direction d'un véhicule notamment utilitaire**

Verfahren und Vorrichtung zur Lenkungssteuerung eines Fahrzeuges, insbesondere eines Nutzfahrzeuges

Method and device for steering command of a vehicle, especially an utility vehicle

(84) Etats contractants désignés:
**AT BE CH CY DE DK ES FI FR GB GR IE IT LI LU MC NL PT SE TR**

(30) Priorité: **10.12.1999  FR 9915613**

(43) Date de publication de la demande:
**13.06.2001  Bulletin 2001/24**

(73) Titulaire: **RENAULT VEHICULES INDUSTRIELS**
**69800 Saint Priest (FR)**

(72) Inventeurs:
• **Ceyzeriat, Frédéric**
**69003 Lyon (FR)**
• **Dayre, Eric**
**38540 Saint Just Chaleyssin (FR)**
• **Ho, Pascal**
**69008 Lyon (FR)**

(74) Mandataire: **Palix, Stéphane**
**Cabinet Laurent et Charras**
**20, rue Louis Chirpaz**
**B.P. 32**
**69131 Ecully Cedex (FR)**

(56) Documents cités:
**DE-A- 19 703 657        DE-A- 19 841 706**
**FR-A- 2 766 782**

• **PATENT ABSTRACTS OF JAPAN vol. 1995, no. 03, 28 avril 1995 (1995-04-28) -& JP 06 336170 A (FUJI HEAVY IND LTD), 6 décembre 1994 (1994-12-06)**
• **PATENT ABSTRACTS OF JAPAN vol. 016, no. 245 (M-1260), 4 juin 1992 (1992-06-04) -& JP 04 055168 A (HITACHI LTD), 21 février 1992 (1992-02-21)**

## Description

La présente invention est relative à un procédé et un dispositif de commande de la direction d'un véhicule automobile, notamment de type utilitaire ou industriel.

La structure d'une direction assistée de véhicule automobile, notamment de type utilitaire ou industriel, comme les autocars, les autobus et les poids-lourds est bien connue dans la technologie automobile. En général, le volant est solidaire en rotation de la colonne de direction couplée à un levier dit "levier pendant" qui, par l'intermédiaire d'une bielle de direction, agit sur la barre de braquage des roues. La colonne de direction permet d'appliquer au boîtier d'assistance le couple de direction souhaité par le conducteur. Une telle assistance de direction doit pouvoir fournir un effort d'assistance suffisant pour effectuer les manoeuvres exigeant les puissances de braquage importantes, telles que celles impliquées dans les manoeuvres de parking par exemple. Pour fixer les idées, à un couple maximal de l'ordre de 300 Nm côté volant, doit pouvoir répondre un couple d'assistance de l'ordre de 7000 Nm appliqué en sortie du boîtier d'assistance. L'énergie nécessaire à cet effet est injectée dans le système au niveau de ce boîtier par un dispositif hydraulique agissant sur l'arbre de sortie du boîtier.

Il est par ailleurs connu, par exemple de la demande de brevet français FR-A-2 766 782 qui montre les charactéristiques du préambule des revendications 1 et 10 au nom de la Demanderesse, d'équiper un véhicule utilitaire ou industriel d'un système de guidage de trajectoire. Dans ce cas, il s'agit de guider le véhicule transversalement selon une trajectoire prédéterminée, soit au moyen de repères matérialisés sur la route, soit par des rails de guidage latéraux, soit le plus souvent alternativement par les deux modes de guidage. Des capteurs relèvent les écarts que prend le véhicule par rapport au trajet prescrit et à l'aide d'une boucle de régulation, la trajectoire est constamment corrigée à l'aide d'un moteur-couple électrique agissant sur la direction du véhicule.

Ce moteur-couple électrique est monté dans la chaîne cinématique de l'assistance de direction entre le boîtier d'assistance hydraulique et la colonne de direction et permet ainsi, moyennant des efforts d'assistance nettement moindres, de corriger la trajectoire du véhicule lorsqu'il circule sur la route, le boîtier hydraulique prenant en charge les efforts qui doivent être fournis pendant les manoeuvres effectuées à très faible vitesse, telles que les manoeuvres de parking, par exemple.

Dans cette solution antérieure, la direction comporte donc deux organes moteurs, l'un hydraulique et l'autre électrique, à chacun desquels doit être associé un système de commande distinct. Ceci complique considérablement la structure de la direction qui, de la sorte, greffe de façon trop importante le coût du véhicule.

L'invention a pour but de fournir une direction pour véhicule automobile qui soit dépourvue des inconvénients qui viennent d'être mentionnés.

Elle a donc pour objet un procédé de commande d'une direction de véhicule automobile, notamment de véhicule utilitaire, cette direction comprenant une boucle de régulation destinée, pendant la mise en oeuvre d'un mode de guidage et conformément à un signal de consigne de guidage engendré en fonction d'un marquage matérialisé le long d'un trajet à effectuer par le véhicule, à commander un actuateur de braquage des roues, ce procédé étant caractérisé en ce qu'il consiste, pour mettre en oeuvre un mode d'assistance de direction, à inhiber sélectivement ledit signal de consigne de guidage, et, pendant cette inhibition, à remplacer ledit signal de consigne de guidage par un signal de consigne d'assistance de direction pour commander ledit actuateur en fonction d'une loi d'assistance prédéterminée.

Grâce à ces caractéristiques, la direction ne comporte qu'un seul actionneur avec sa régulation associée ce qui simplifie ainsi très notablement la structure de la direction.

Selon d'autres caractéristiques avantageuses de l'invention:

- la sélection entre ledit mode de guidage et ledit mode d'assistance est effectuée manuellement;

- la sélection du mode d'assistance est réalisée par défaut à l'initialisation de ladite boucle de régulation;

- il consiste à effectuer un contrôle de défaillance de ladite boucle de régulation et dudit actionneur, et à sélectionner ledit mode d'assistance lorsqu'une défaillance d'un premier niveau de gravité prédéterminée est constatée;

- il consiste également à inhiber ledit actionneur, lorsqu'une défaillance d'un second niveau de gravité, supérieur au premier niveau de gravité est constatée;

- ledit actionneur est un moteur-couple électrique et le procédé consiste en outre à réguler le courant envoyé dans ledit moteur sélectivement en fonction desdits signaux de consigne de guidage et d'assistance;

- lesdits signaux de consigne de guidage et d'assistance sont des consignes de couple pour ledit moteur-couple;

- il consiste à engendrer la consigne de couple de guidage en fonction de la somme d'un signal angulaire de consigne de guidage représentant la direction à prendre par ledit véhicule et d'un signal de position angulaire actuelle dudit moteur-couple, éventuellement corrigé en fonction d'une démultiplication;

- il consiste à engendrer ladite consigne de couple d'assistance en calculant la somme d'une valeur angulaire par laquelle le volant est tourné par le conducteur du véhicule et d'une valeur de position angulaire dudit moteur-couple et il consiste en outre à appliquer à cette somme une loi d'assistance prédéterminée.

L'invention a également pour objet un dispositif de commande de la direction d'un véhicule automobile, notamment d'un véhicule utilitaire, comprenant un moteur-couple électrique destiné à entraîner un mécanisme de direction dudit véhicule, des moyens de régulation pour fournir audit moteur-couple un courant qui est une fonction d'une consigne de couple de guidage à fournir par ledit moteur, et des moyens pour engendrer ladite consigne de couple de guidage en fonction d'un marquage jalonnant un trajet devant être suivi par ledit véhicule, ce dispositif de commande étant caractérisé en ce qu'il comprend également des moyens pour engendrer une consigne de couple d'assistance à fournir par ledit moteur et des moyens de sélection de mode de guidage/assistance destinés à appliquer sélectivement l'une ou l'autre consigne de couple auxdits moyens de régulation.

Selon une caractéristique avantageuse de l'invention, lesdits moyens de sélection de mode guidage/assistance comprennent un organe de commande installé sur le tableau de bord du véhicule.

D'autres caractéristiques et avantages de la présente invention apparaîtront au cours de la description qui va suivre, donnée uniquement à titre d'exemple et faite en se référant aux dessins annexés sur lesquels:

- la figure 1 représente un schéma fonctionnel général d'un exemple de réalisation d'une direction pour véhicule automobile selon l'invention;
- la figure 2 est une représentation schématique d'une partie de la structure mécanique d'une direction selon l'invention;
- la figure 3 représente schématiquement une boucle de réglage pouvant être utilisée dans la direction selon l'invention; et
- les figures 4, 5 et 6 sont trois organigrammes illustrant le fonctionnement de la direction selon l'invention.

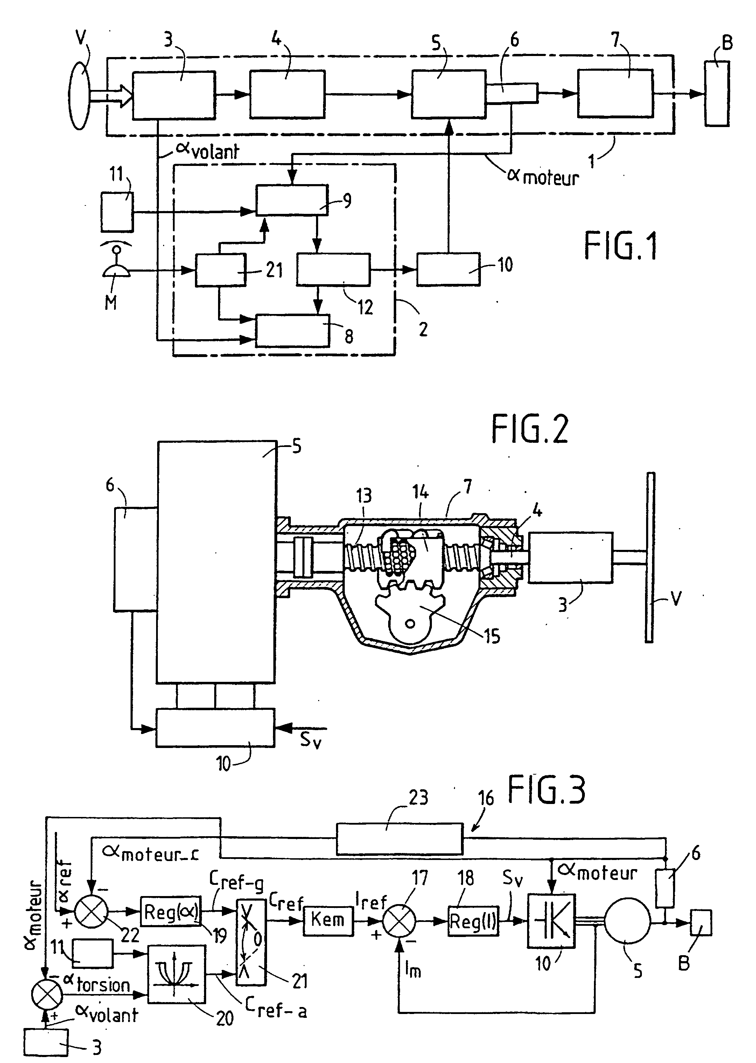

En se référant à la figure 1, on décrira un exemple de réalisation d'une direction pour véhicule utilitaire selon l'invention.

Cette direction comprend deux parties principales, à savoir une chaîne cinématique 1 et un calculateur de direction 2 destiné à fournir les commandes nécessaires à la chaîne cinématique 1 et, pour ce faire, à en recevoir des signaux de mesure.

La chaîne cinématique 1 est actionnée par le volant V du véhicule monté de toute manière connue sur une colonne de direction (non représentée) à laquelle est associé un capteur 3 de position angulaire. La colonne de direction est connectée à une barre de torsion symbolisée par le rectangle 4. Un moteur-couple électrique 5, de préférence un moteur triphasé synchrone, est pourvu d'un capteur de position 6 et implanté sur la colonne de direction en agissant sur la barre de torsion 4 et sur un démultiplicateur mécanique 7. Celui-ci est couplé à la barre de direction B qui assure le braquage des roues directrices du véhicule.

Le calculateur 2 comporte des moyens 8 de commande de guidage du véhicule. Ceux-ci sont agencés pour asservir l'angle de braquage des roues à l'aide d'un rebouclage réalisé au moyen du capteur de position 6 du moteur-couple 5. Les moyens de commande de guidage 8 reçoivent également un signal de consigne de braquage ($\alpha_{ref}$) par l'intermédiaire de capteurs du système de guidage (non représente) du véhicule de façon analogue à celle décrite dans FR 97 09 813 précité.

Le calculateur 2 comprend également des moyens 9 agencés pour calculer le couple d'assistance de consigne en calculant l'angle de torsion ($\alpha_{torsion}$) de la barre 4 à partir des informations relevées par le capteur de position 3 ($\alpha_{volant}$) et par le capteur de position 6 ($\alpha_{moteur}$). Ces moyens de calcul reçoivent également l'information de vitesse du véhicule relevée par un capteur 11.

Le moteur-couple 5 est asservi en courant par une boucle de régulation décrite par la suite dans laquelle est notamment inséré un convertisseur statique électronique 10 par l'intermédiaire duquel le moteur-couple 5 est alimenté.

Les commandes élaborées par les moyens de calcul 8 et 9 sont appliquées au convertisseur 10 par l'intermédiaire de moyens de surveillance 12 qui confrontent les commandes engendrées à des critères de sécurité prédéterminés. Ces moyens de surveillance 12 sont également agencés pour permettre le contrôle du bon fonctionnement du moteur-couple 5.

La figure 2 représente schématiquement une partie d'un exemple de chaîne cinématique pouvant être utilisée dans la direction selon l'invention. Sur cette figure, des repères identiques à ceux de la figure 1 désignent les mêmes éléments. On voit en coupe le démultiplicateur 7 qui peut comprendre par exemple, comme représenté, une vis à billes 13 associée à un pignon-crémaillère 14, ce dernier engrenant avec une pièce dentée 15 solidaire du levier pendant (non représenté) de la direction. Ce levier est couplé à la barre de direction B.

La vis à billes 13 peut être faite d'une seule pièce avec la barre de torsion 4. On constate que cet ensemble est particulièrement compact de sorte que le concepteur du véhicule a un large choix pour l'implanter à un endroit favorable dans le véhicule.

Pour que le moteur-couple 5 puisse assurer aussi bien l'assistance de direction que le guidage du véhicule, il est prévu selon l'invention, que son couple de sortie soit compatible avec les efforts importants demandés par l'assistance de direction, lorsque des braquages à faible vitesse doivent être effectués. De la sorte, il sera à même, à fortiori, de fournir également les couples plus faibles qui seront nécessaires pour assurer le guidage du véhicule, lorsqu'il se déplace sur route.

Il s'est avéré qu'un moteur-couple ayant un couple de sortie de 300 Nm peut convenir pour convertir des efforts de direction demandés situés entre 15 Nm et 300 Nm, moyennant un étage de démultiplication de 24:1 à 32:1, le couple d'assistance sur les roues pouvant alors atteindre 6700 Nm. Bien entendu, cet exemple n'est donné que pour fixer les idées, d'autres valeurs étant possibles.

Ainsi, on voit que selon l'invention, la direction ne comporte qu'un seul moyen moteur et rend inutile l'emploi d'un boîtier d'assistance hydraulique. Il en résulte, outre un gain de place, une simplification notable de la direction qui peut ainsi être fabriquée à un meilleur coût. En outre, l'ensemble de la direction étant de nature électrique, il n'est pas nécessaire de prévoir un système hydraulique avec sa pompe, ses moyens de régulation et ses tuyauteries.

La figure 3 représente un schéma d'une boucle de régulation 16 mise en oeuvre dans le calculateur 2. Bien entendu, les fonctions exercées par celui-ci peuvent être réalisées par logiciel que les spécialistes seront à même de concevoir à partir de la présente description. La boucle de régulation 16 met en oeuvre les fonctions des moyens de commande 8 et 9 décrites sommairement à propos de la figure 1.

Le moteur-couple 5 est asservi en courant. A cet effet, un signal de consigne de courant $I_{ref}$ est appliqué à un sommateur 17 qui reçoit également un signal $I_m$ représentant le courant réel du moteur-couple 5. Le signal d'erreur obtenu dans le sommateur 17 est appliqué à un régulateur 18 de type PI (proportionnel-intégral) qui détermine un signal de commande $S_v$ pour le convertisseur 10 permettant à celui-ci d'imposer au moteur-couple 5 le déplacement angulaire et le couple requis en utilisant le signal réel de déplacement angulaire $\alpha_{moteur}$ provenant du capteur de position 6.

La consigne de courant $I_{ref}$ est obtenu dans une table de conversion Kem mémorisée dans le calculateur 2 et dans laquelle sont déposées, pour une gamme de valeurs d'une consigne de couple $C_{ref}$ appliquée à son entrée, des valeurs correspondantes de la consigne de courant $I_{ref}$. En effet, l'expression mathématique du couple électromagnétique développé par le moteur-couple 5 fait apparaître une proportionnalité en courant dont le facteur de proportionnalité est appelé constante de couple $K_{em}$.

Selon l'invention, cette consigne de couple $C_{ref}$ peut provenir soit d'un régulateur 19 de type PI (proportionnel-intégral) déterminant une consigne de couple $C_{ref-g}$, pour assurer le mode de guidage du véhicule, soit d'une table d'assistance 20 dont le signal de sortie constitue une consigne de couple $C_{ref-a}$ établie lorsque le véhicule doit être dirigé en mode d'assistance.

L'une ou l'autre des consignes de guidage $C_{ref-g}$ ou d'assistance $C_{ref-a}$ peut être appliquée à la table Kem en fonction de la position d'un sélecteur de modes 21 (voir aussi la figure 1). Ce dernier peut être activé grâce à un organe de commande, tel qu'une manette M, prévu sur le tableau de bord du véhicule pour que le conducteur puisse décider du mode de direction dans lequel le véhicule va être dirigé. Toutefois, selon une variante de réalisation, le sélecteur de modes 21 pourrait également être commandé par détection sur la chaussée d'un marquage particulier à l'aide d'une caméra ou de tout autre capteur approprié, mettant fin au guidage automatique du véhicule ou au contraire l'initialisant. Par exemple, s'il s'agit d'un autocar assurant une ligne régulière de telles transitions pourront se faire automatiquement à l'approche d'un arrêt ou lorsque le véhicule quitte l'arrêt. La commande du sélecteur 21 peut également être réalisée en fonction de la vitesse du véhicule.

La table 21 contient une loi de variation du couple à appliquer par le moteur-couple 5 telle que

$$C_{ref-a} = F(\alpha_{torsion}, V)$$

dans laquelle $\alpha_{torsion} = \alpha_{volant} - \alpha_{moteur}$ et V la vitesse du véhicule, $\alpha_{volant}$ étant l'angle sur lequel le volant est tourné par le conducteur (capteur 3).

Le signal d'entrée du régulateur 19 provient d'un sommateur 22 qui établit la différence entre un signal de consigne $\alpha_{ref}$ provenant du système de guidage et un signal angulaire $\alpha_{moteur-c}$ dont la valeur correspond au signal angulaire $\alpha_{moteur}$ fourni par le capteur de position 6 corrigé dans un bloc de conversion 23 d'un coefficient qui est établi en fonction de la démultiplication assurée par le démultiplicateur 7.

Ainsi, en fonction de la position du sélecteur de modes 21, le signal de consigne du moteur-couple 5 peut représenter une demande de braquage de guidage ou une demande de braquage d'assistance.

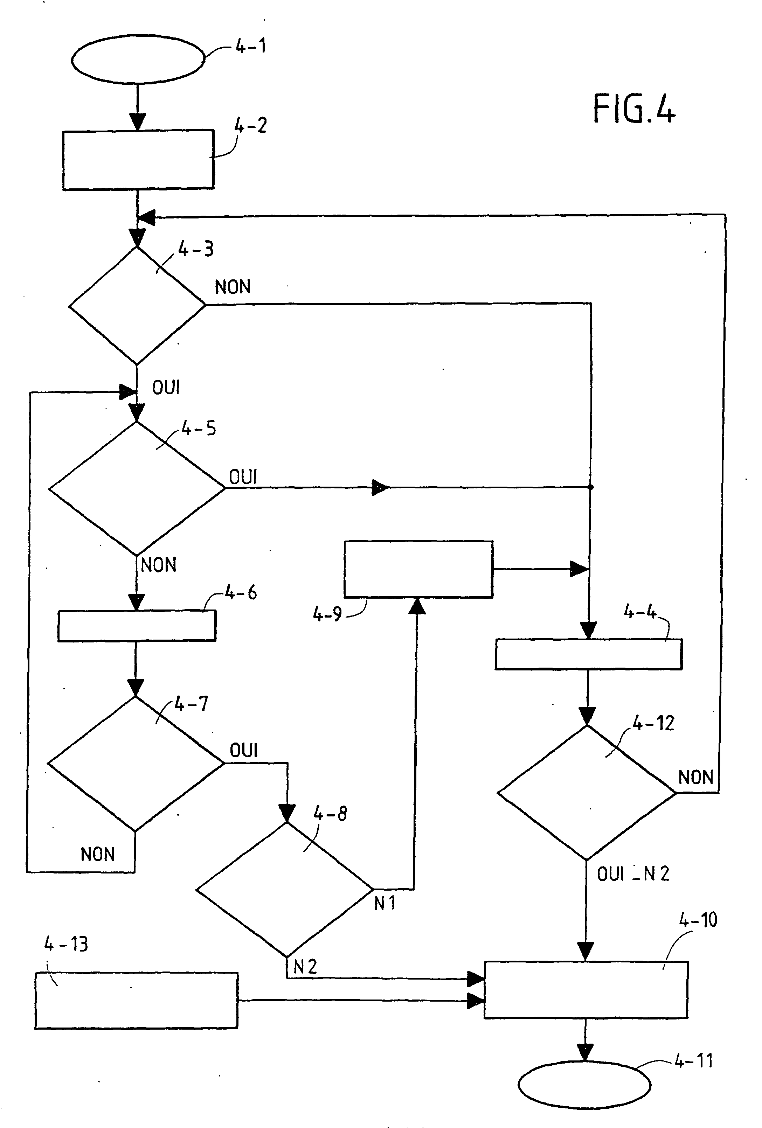

On va maintenant examiner l'organigramme de la figure 4 qui décrit globalement le programme exécuté par le calculateur 2 pendant le fonctionnement de la direction selon l'invention.

A l'étape 4-1 du programme, le véhicule est mis en marche. A l'étape 4-2, dès que le conducteur manifeste la volonté de faire rouler le véhicule, le calculateur 2 est initialisé. L'initialisation étant achevée, un test est effectué en 4-3 pour déterminer si le mode de guidage est sélectionné. Si ce n'est pas le cas, la direction est placée dans la configuration du mode d'assistance en passant à l'étape 4-4. Ce mode d'assistance est donc mis en place par défaut dès le démarrage du véhicule.

Si le test en 4-3 est affirmatif, un autre test est effectué en 4-5 pour déterminer s'il est mis fin au mode de guidage. Dans l'affirmative, le programme passe à l'étape 4-4 et le mode d'assistance est exécuté.

Si le test en 4-5 reçoit une réponse négative, le programme passe à l'étape 4-6 au cours de laquelle le calculateur 2 exécute le mode de guidage.

Les moyens de surveillance 12 contrôlent constamment le bon déroulement du mode de guidage et à cet effet, le programme exécute un test en 4-7. Si ce test constate qu'il n'y a pas défaillance, le programme reboucle sur l'étape 4-5 en attendant la détection d'une commande de fin de guidage. Si le test en 4-7 s'avère affirmatif, le programme passe dans une procédure de défaillance.

Ainsi, la sortie du mode de guidage peut se faire soit par détection de la commande de fin de guidage, soit par détection d'une défaillance, soit par détection sur la chaussée d'un motif représentant la fin d'un tronçon de trajet sur lequel le guidage automatique est autorisé. La procédure de défaillance peut être déclenchée par exemple, si les moyens de surveillance 12 du calculateur 2 constatent que le signal de consigne en angle de roue est erroné. Ils peuvent également effectuer un contrôle énergétique du couple du moteur 5 ou de l'état thermique de ce dernier ou constater que les moyens de repérage sur la chaussée ne sont plus détectés correctement.

Au cours d'un test 4-8, le calculateur 2 détermine, si la défaillance relève soit d'un niveau de gravité suffisamment faible (N1) pour que le véhicule puisse poursuivre sa progression manuellement, soit d'un niveau de gravité nécessitant une intervention plus incisive du conducteur (arrêt du véhicule; N2).

Si le test en 4-8 constate une défaillance de niveau N1, le programme passe à l'étape 4-9, au cours duquel le mode de guidage est suspendu, et le programme retourne alors à l'étape 4-4 au cours de laquelle le mode d'assistance est exécuté.

Si, au contraire, le test 4-8 conduit à constater une défaillance de niveau N2, le fonctionnement du moteur-couple 5 est inhibé au cours de l'étape 4-10. Le fonctionnement du calculateur 2 est alors suspendu et une alarme est engendrée prévenant le conducteur de la gravité de la défaillance (étape 4-11).

L'inhibition du moteur-couple 5 peut également intervenir à la suite de la réponse affirmative à un test 4-12 que les moyens de surveillance 12 exécutent constamment pendant la mise en oeuvre du mode d'assistance (étape 4-13). Ce contrôle est analogue à celui décrit pour le mode de guidage.

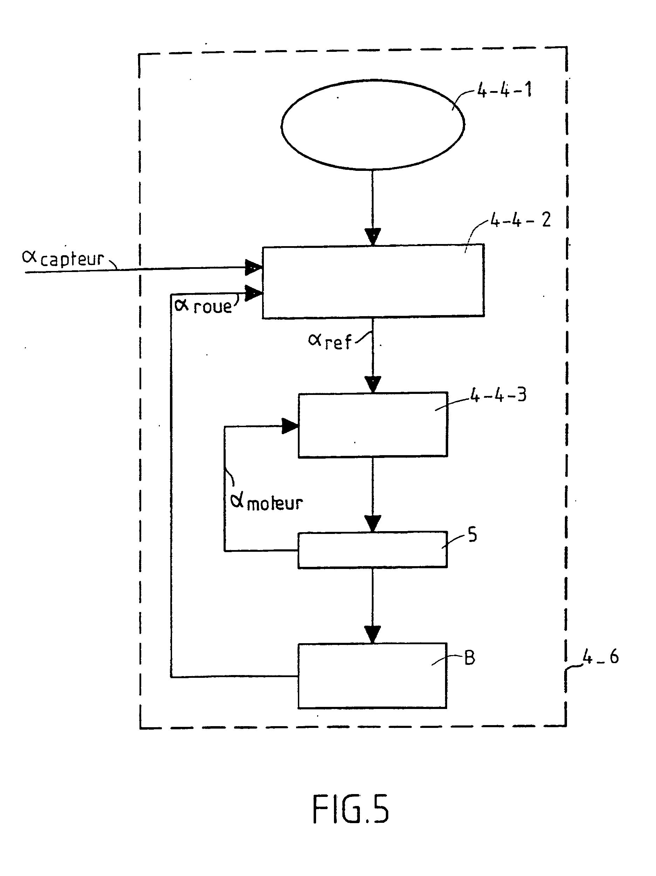

La figure 5 est un organigramme plus détaillé du mode de guidage se déroulant pendant l'étape 4-6 décrite à propos de la figure 4. Ce mode est initialisé en 4-4-1, chaque fois que le test effectué au cours de l'étape 4-5 du programme global reçoit une réponse négative.

Une fois initialisé, le mode de guidage calcule, à l'étape 4-4-2, la valeur de consigne d'angle $\alpha_{ref}$ consistant à établir la somme de la valeur d'angle $\alpha_{roue}$ de braquage réel des roues et de la valeur angulaire $\alpha_{capteur}$ mesurée par le ou les capteurs qui font l'acquisition des données matérialisées sur la chaussée. La valeur $\alpha_{ref}$ est injectée dans la boucle de réglage 16 par laquelle est déterminé le couple qui sera appliqué à la barre de direction B. La fonction de la boucle de réglage 16 est illustrée sur la figure 5 par le rectangle 4-4-3.

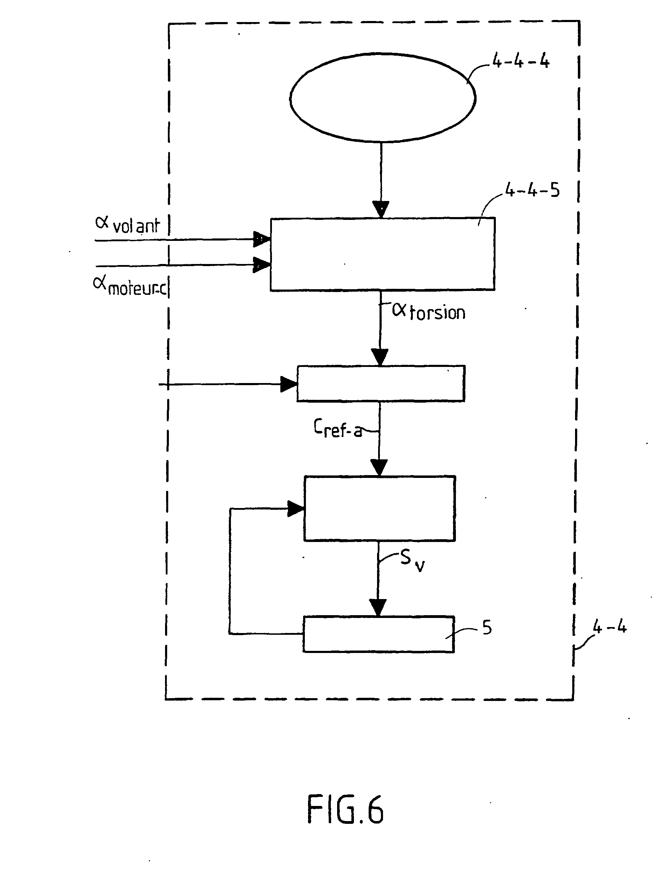

La figure 6 est un organigramme plus détaillé du mode d'assistance se déroulant pendant l'étape 4-4 décrite à propos de la figure 4. Ce mode est initialisé en 4-4-4, chaque fois que les tests effectués au cours des étapes 4-3 et 4-5 du programme global reçoivent respectivement une réponse négative ou une réponse positive, ou également lorsque survient une défaillance de niveau N1 constatée par le test de l'étape 4-8.

L'initialisation étant achevée, le mode d'assistance consiste à calculer (étape 4-4-5) l'angle de torsion $\alpha_{torsion}$ en faisant la somme de l'angle du volant $\alpha_{volant}$ et de l'angle corrigé $\alpha_{moteur-c}$ du moteur-couple 5. Puis, au cours de l'étape 4-4-6, le processus d'assistance consiste à appliquer la loi d'assistance 20 d'où résulte la valeur $C_{ref-a}$. Cette valeur est utilisée dans la boucle de régulation 16 (étape 4-4-7) pour la commande du moteur-couple 5, comme déjà décrit à propos de la figure 4.

## Revendications

1. Procédé de commande d'une direction de véhicule automobile, notamment de véhicule utilitaire, cette direction comportant une boucle de régulation (16) qui est destinée, pendant la mise en oeuvre d'un mode de guidage et conformément à un signal de consigne de guidage ($C_{ref-g}$) engendré en fonction d'un marquage matérialisé le long d'un trajet à effectuer par le véhicule, à commander un actuateur de braquage des roues (5), ce procédé étant **caractérisé en ce qu'**il consiste, pour mettre en oeuvre un mode d'assistance de direction, à inhiber sélectivement ledit signal de consigne de guidage ($C_{ref-g}$) et, pendant cette inhibition, à remplacer ledit signal de consigne de guidage par un signal de consigne d'assistance de direction ($C_{ref-a}$) pour commander ledit actuateur (5) en fonction d'une loi d'assistance prédéterminée (20).

2. Procédé suivant la revendication 1, **caractérisé en ce que** la sélection entre ledit mode de guidage et ledit mode d'assistance est effectuée manuellement (21, M).

3. Procédé suivant l'une quelconque des revendications 1 et 2, **caractérisé en ce que** la sélection du mode d'assistance est effectuée par défaut à l'initialisation de ladite boucle de régulation (16).

4. Procédé suivant l'une quelconque des revendications 1 à 3, **caractérisé en ce qu'**il consiste à effectuer un contrôle de défaillance de ladite boucle de régulation (16) et dudit actionneur (5), et à sélectionner ledit mode d'assistance lorsqu'une défaillance d'un premier niveau de gravité prédéterminée (N1) est constatée.

**5.** Procédé suivant la revendication 4, **caractérisé en ce qu'**il consiste également à inhiber ledit actionneur (5), lorsqu'une défaillance d'un second niveau de gravité (N2), supérieur au premier niveau de gravité (N1) est constatée.

**6.** Procédé suivant l'une quelconque des revendications 1 à 5, **caractérisé en ce que** ledit actionneur est un moteur-couple électrique (5) et **en ce que** le procédé consiste à réguler le courant ($S_v$) envoyé dans ledit moteur (5) sélectivement en fonction desdits signaux de consigne de guidage et d'assistance ($C_{ref-g}$, $C_{ref-a}$).

**7.** Procédé suivant la revendication 6, **caractérisé en ce que** lesdits signaux de consigne de guidage et d'assistance ($C_{ref-g}$, $C_{ref-a}$) sont des consignes de couple pour ledit moteur-couple (5).

**8.** Procédé suivant la revendication 7, **caractérisé en ce qu'**il consiste à engendrer la consigne de couple de guidage ($C_{ref-g}$) en fonction de la somme d'un signal angulaire de consigne de guidage ($\alpha_{ref}$) représentant la direction à prendre par ledit véhicule et d'un signal de position angulaire actuelle ($\alpha_{moteur}$) dudit moteur-couple, éventuellement corrigé en fonction d'une démultiplication (23).

**9.** Procédé suivant l'une quelconque des revendications 7 et 8, **caractérisé en ce qu'**il consiste à engendrer ladite consigne de couple d'assistance ($C_{ref-a}$) en calculant la somme d'une valeur angulaire ($\alpha_{volant}$) par laquelle le volant (V) est tourné par le conducteur du véhicule et d'une valeur de position angulaire ($\alpha_{moteur}$) dudit moteur-couple (5), et **en ce qu'**il consiste en outre à appliquer à cette somme une loi d'assistance prédéterminée (20).

**10.** Dispositif de commande de la direction d'un véhicule automobile, notamment d'un véhicule utilitaire, comprenant un moteur-couple électrique (5) destiné à entraîner un mécanisme de direction (B) dudit véhicule, des moyens de régulation (10, 17, 18) pour fournir audit moteur-couple (5) un courant ($S_v$) qui est une fonction d'une consigne de couple de guidage ($C_{ref-g}$) à fournir par ledit moteur, et des moyens (19, 22) pour engendrer ladite consigne de couple de guidage en fonction d'un marquage jalonnant un trajet devant être suivi par ledit véhicule, ce dispositif de commande étant **caractérisé en ce qu'**il comprend également des moyens (20) pour engendrer une consigne de couple d'assistance ($C_{ref-a}$) à fournir par ledit moteur (5) et des moyens de sélection de mode de guidage/assistance (21, M) destinés à appliquer sélectivement l'une ou l'autre consigne de couple auxdits moyens de régulation (10, 17, 18).

**11.** Dispositif suivant la revendication 10, **caractérisé en ce que** lesdits moyens de sélection de mode guidage/assistance (20) comprennent un organe de commande (M) installé sur le tableau de bord du véhicule.

**Patentansprüche**

**1.** Verfahren zur Regelung einer Lenkung eines Kraftfahrzeugs, insbesondere eines Nutzfahrzeugs, wobei diese Lenkung einen Regelkreis (16) umfaßt, der dazu bestimmt ist, während der Verwendung eines Spurführungsmodus und entsprechend einem Spurführungssollwertsignal ($C_{ref-g}$), das in Abhängigkeit von einer Markierung erzeugt wird, die entlang einer von dem Fahrzeug zurückzulegenden Strecke verwirklicht ist, einen Radeinschlag-Steller (5) zu regeln, wobei dieses Verfahren **dadurch gekennzeichnet ist, daß** es, um einen Servolenkmodus zu verwenden, darin besteht, selektiv das Spurführungssollwertsignal ($C_{ref-g}$) zu hemmen und während dieser Hemmung das Spurführungssollwertsignal durch ein Servolenksollwertsignal ($C_{ref-a}$) zu ersetzen, um den Steller (5) in Abhängigkeit von einem vorbestimmten Servo-Gesetz (20) zu regeln.

**2.** Verfahren nach Anspruch 1, **dadurch gekennzeichnet, daß** die Wahl zwischen dem Spurführungsmodus und dem Servomodus manuell erfolgt (21, M).

**3.** Verfahren nach einem der Ansprüche 1 und 2, **dadurch gekennzeichnet, daß** die Wahl des Servomodus standardmäßig bei Initialisierung des Regelkreises (16) erfolgt.

**4.** Verfahren nach einem der Ansprüche 1 bis 3, **dadurch gekennzeichnet, daß** es darin besteht, eine Fehlerkontrolle für den Regelkreis (16) und den Steller (5) durchzuführen und den Servomodus zu wählen, wenn ein Fehler von einem vorbestimmten ersten Schweregrad (N1) festgestellt wird.

**5.** Verfahren nach Anspruch 4, **dadurch gekennzeichnet, daß** es ebenfalls darin besteht, den Steller (5) zu hemmen, wenn ein Fehler von einem zweiten Schweregrad (N2), der größer ist als der erste Schweregrad (N1), festgestellt wird.

**6.** Verfahren nach einem der Ansprüche 1 bis 5, **dadurch gekennzeichnet, daß** der Steller ein elektrischer Drehmomentmotor (5) ist und daß das Verfahren darin besteht, den in den Motor (5) geleiteten Strom ($S_v$) selektiv in Abhängigkeit von den Spurführungs- und Servosollwertsignalen ($C_{ref-g}$, $C_{ref-a}$) zu regeln.

7. Verfahren nach Anspruch 6, **dadurch gekennzeichnet, daß** die Spurführungs- und Servosollwertsignale ($C_{ref-g}$, $C_{ref-a}$) Drehmomentsollwerte für den Drehmomentmotor (5) sind.

8. Verfahren nach Anspruch 7, **dadurch gekennzeichnet, daß** es darin besteht, den Spurführungs-Drehmomentsollwert ($C_{ref-g}$) in Abhängigkeit von der Summe eines Spurführungssollwert-Winkelsignals ($\alpha_{ref}$), welches die von dem Fahrzeug einzuschlagende Richtung repräsentiert, und eines Signals der augenblicklichen Winkelposition ($\alpha_{Motor}$) des Drehmomentmotors, gegebenenfalls korrigiert in Abhängigkeit von einer Untersetzung (23), zu erzeugen.

9. Verfahren nach einem der Ansprüche 7 und 8, **dadurch gekennzeichnet, daß** es darin besteht, den Servo-Drehmomentsollwert ($C_{ref-a}$) zu erzeugen, indem die Summe eines Winkelwertes ($\alpha_{Lenkrad}$), um den das Lenkrad (V) von dem Lenker des Fahrzeugs gedreht wird, und eines Winkelpositionswertes ($\alpha_{Motor}$) des Drehmomentmotors (5) berechnet wird, und daß es außerdem darin besteht, auf diese Summe ein vorbestimmtes Servo-Gesetz (20) anzuwenden.

10. Vorrichtung zur Regelung der Lenkung eines Kraftfahrzeugs, insbesondere eines Nutzfahrzeugs, umfassend einen elektrischen Drehmomentmotor (5), der dazu bestimmt ist, einen Lenkmechanismus (B) des Fahrzeugs anzutreiben, Regelmittel (10, 17, 18), um an den Drehmomentmotor (5) einen Strom ($S_v$) zu liefern, der eine Funktion eines von dem Motor zu liefernden Spurführungs-Drehmomentsollwerts ($C_{ref-g}$) ist, und Mittel (19, 22) zur Erzeugung des Spurführungs-Drehmomentsollwerts in Abhängigkeit von einer Markierung, die eine von dem Fahrzeug zu verfolgende Strecke markiert, wobei diese Regelvorrichtung **dadurch gekennzeichnet ist, daß** sie ebenfalls Mittel (20) umfaßt, um einen von dem Motor (5) zu liefernden Servo-Drehmomentsollwert ($C_{ref-a}$) zu erzeugen, sowie Mittel zur Wahl des Spurführungs-/Servomodus (21, M), dazu bestimmt, selektiv den einen oder anderen Drehmomentsollwert auf die Regelmittel (10, 17, 18) anzuwenden.

11. Vorrichtung nach Anspruch 10, **dadurch gekennzeichnet, daß** die Mittel zur Wahl des Spurführungs-/Servomodus (20) ein Bedienungsorgan (M) umfassen, das auf dem Armaturenbrett des Fahrzeugs installiert ist.

## Claims

1. Method for controlling motor vehicle steering, in particular for a commercial vehicle, this steering comprising a regulating loop (16) which is intended, during the implementation of a mode of guidance and in accordance with a guidance preset signal ($C_{ref-g}$) produced as a function of a marking made along a path to be taken by the vehicle, to control a wheel deflection actuator (5), this method being **characterized in that** it consists, in order to implement a steering assistance mode, in selectively disabling the said guidance preset signal ($C_{ref-g}$) and, during this disabling, in replacing the said guidance preset signal with a steering assistance preset signal ($C_{ref-a}$) so as to control the said actuator (5) as a function of a predetermined assistance law (20).

2. Method according to Claim 1, **characterized in that** the selection between the said guidance mode and the said assistance mode is performed manually (21, M).

3. Method according to either of Claims 1 and 2, **characterized in that** the selection of the assistance mode is performed by default on initializing the said regulating loop (16).

4. Method according to any one of Claims 1 to 3, **characterized in that** it consists in performing a check of failure of the said regulating loop (16) and of the said actuator (5), and in selecting the said assistance mode when a failure of a first level of predetermined gravity (N1) is noted.

5. Method according to Claim 4, **characterized in that** it consists also in disabling said actuator (5), when a failure of a second level of gravity (N2), greater than the first level of gravity (N1) is noted.

6. Method according to any one of Claims 1 to 5, **characterized in that** the said actuator is an electric torque motor (5) and **in that** the method consists in regulating the current ($S_v$) sent to the said motor (5) selectively as a function of the said guidance and assistance preset signals ($C_{ref-g}$, $C_{ref-a}$).

7. Method according to Claim 6, **characterized in that** the said guidance and assistance preset signals ($C_{ref-g}$, $C_{ref-a}$) are torque presets for the said torque motor (5).

8. Method according to Claim 7, **characterized in that** it consists in producing the guidance torque preset ($C_{ref-g}$) as a function of the sum of a guidance preset angular signal ($\alpha_{ref}$) representing the direction to be taken by the said vehicle and of a signal of current angular position ($\alpha_{motor}$) of the said torque motor, possibly corrected as a function of a step-down reduction (23).

**9.** Method according to either of Claims 7 and 8, **characterized in that** it consists in producing the said assistance torque preset ($C_{ref-a}$) by calculating the sum of an angular value ($\alpha_{steeringwheel}$) by which the steering wheel (V) is turned by the driver of the vehicle and of a value of angular position ($\alpha_{motor}$) of the said torque motor (5), and **in that** it furthermore consists in applying a predetermined assistance law (20) to this sum.

**10.** Device for controlling the steering of a motor vehicle, in particular of a commercial vehicle, comprising an electric torque motor (5) intended to drive a steering mechanism (B) of the said vehicle, regulating means (10, 17, 18) for providing the torque motor (5) with a current ($S_v$) which is a function of a preset guidance torque ($C_{ref-g}$) to be provided by the said motor, and means (19, 22) for producing the said preset guidance torque as a function of a marking demarcating a path having to be followed by the said vehicle, this control device being **characterized in that** it also comprises means (20) for producing a preset assistance torque ($C_{ref-a}$) to be provided by the said motor (5) and guidance/assistance mode selection means (21, M) intended to selectively apply one or the other torque preset to the said regulating means (10, 17, 18).

**11.** Device according to Claim 10, **characterized in that** the said guidance/assistance mode selection means (20) comprise a control member (M) installed on the dashboard of the vehicle.

EP 1 106 473 B1

FIG.1

FIG.2

FIG.3

FIG.4

FIG.5

FIG.6